Europäisches Patentamt

European Patent Office

Office européen des brevets

(11) Publication number: **0 485 674 A1**

## EUROPEAN PATENT APPLICATION

(21) Application number: 90314460.8

(22) Date of filing: 31.12.90

(51) Int. Cl.5: **B01D 63/10**, B01D 65/00

(30) Priority: **14.11.90 US 612802**

(43) Date of publication of application:
**20.05.92 Bulletin 92/21**

(84) Designated Contracting States:
**AT BE CH DE DK ES FR GB GR IT LI LU NL SE**

(71) Applicant: **KOCH MEMBRANE SYSTEMS, INC**
**850 Main Street**
**Wilmington Massachusetts 01887(US)**

(72) Inventor: **McDermott, Thomas C., Jr.**
**19 Beliveau Drive**
**Lynn, Massachusetts 01904(US)**
Inventor: **Skelton, Daniel F.**
**67 Marshall Street**
**Billerica, Massachusetts 01865(US)**

(74) Representative: **Jackson, Peter Arthur et al**
**Gill Jennings & Every, 53-64 Chancery Lane**
**London WC2A 1HN(GB)**

(54) Spiral filtration module with strengthened membrane leaves and method of constructing same.

(57) The subject of the present invention is an improved leaf packet (16) useful in forming a spiral filtration module (34), the improved module (34) which results from utilization of the leaf packet (16) and a method of preparing the leaf packet (16). The membrane sheet (10) utilized in forming a spiral filtration module (34) is fused in the area of its fold to increase the sheet density in this area and thus provide protection against mechanical failure. The densification treatment may include the application of heat, pressure or both to the backing material (14) of the sheet (10). The densification may also include joining a reinforcing material (18) to the sheet (10), preferably by integrally fusing the material (18) to the sheet (10) on the backing side (14).

EP 0 485 674 A1

FIG. 2

This invention relates generally to ultrafiltration technology and, more particularly, to a spiral wound filtration module for use in cross-flow filtration and to a method of constructing same.

The term "ultrafiltration" as used in the present application is intended to encompass microfiltration, nanofiltration, ultrafiltration and reverse osmosis and gas separation. A typical ultrafiltration device comprises a plurality of spiral wound filtration modules through which a fluid to be filtered passes. Such a module is made by winding one or more membrane leaves and permeate envelopes around a permeate tube. The membrane leaves are separated by feed spacer screens which are of a relatively large mesh size to accommodate fluid flow. The permeate passes through the membrane surface of the membrane leaves and is directed to the permeate tube by a permeate carrier sheet. Some type of external restraining means such as a hard shell, straps or a bypass screen, or a combination thereof may be used to hold the spirally wound leaves in tight formation around the tube. The spiral module is then loaded into a housing or pressure vessel which is operated at a slight pressure drop across the module as the fluid being filtered flows through. Concentrate is removed from one end of the module and permeate is removed from the permeate tube.

Many applications of ultrafiltration technology involve food processing where sanitary conditions must be maintained at all times. This necessitates periodic cleaning with relatively harsh chemicals such as (by way of example only) chlorine containing compounds, other oxidizing agents, acids, alkalies and surfactants. These chemicals tend to degrade the membrane material, particularly in areas that are subject to stress. A typical procedure for constructing spiral filtration modules includes folding a membrane sheet in the area that is to be adjacent to the permeate tube. This fold area creates mechanical stresses in the membrane sheet both at the crease and at the point of the contact with the adjacent permeate carrier sheet. Other stress areas in a spiral wound membrane include the location of overlap between two membrane leaves and the overlap of the membrane with any underlying stitching or mechanical fastening devices.

It is typical to employ some type of reinforcing in the fold area so as to reduce the mechanical stresses and prolong the life of the membrane. Two primary techniques are well known to those skilled in the art. The first is the utilization of reinforcing tape which is applied at the crease and extends outwardly from the crease a short distance over what is typically referred to as the fold area of the membrane. The second method of membrane reinforcement is to apply an adhesive in generally the same area as that to which the tape is applied and for the same effect. The difficulty with these prior art techniques for strengthening the fold area of a spiral membrane are that the tape tends to eventually lose its adhesion and peel away, and glue is applied at a thickness such that while the membrane is strengthened in the fold area, the glue creates new stress points especially along its terminal edge. Also, since conventional practice is to apply both tape and glue to the membrane surface (as opposed to the membrane backing), failure of either material may expose a "dead area" of the membrane where the fluid being filtered may collect causing sanitation and efficiency problems.

It is therefore an object of the present invention to provide an improved ultrafiltration module and method of constructing same wherein the membrane material is strengthened in the fold area adjacent to the permeate tube which strengthening is accomplished without introducing stress points which can result in degradation and failure in the area about the fold. Another one of the objectives of our invention is to provide an improved ultrafiltration module and method of constructing same which avoids the use of glue or tape in the fold area and the inherent problems associated with these materials.

It is also an objective of this invention to provide an improved ultrafiltration module and method of constructing same which has had the membrane sheet densified through a fusion process to alter the physical properties of the membrane.

It is also one of the aims of this invention to provide an improved ultrafiltration module and method of constructing same wherein the filtration membrane is strengthened without introducing physical discontinuities into the membrane which may adversely affect operating efficiency.

Still another object of this invention is to provide an improved ultrafiltration membrane and method of constructing same which in one embodiment utilizes a membrane reinforcing member that is fused to the membrane backing in the fold area.

An important aim of this invention is to provide an improved ultrafiltration module and method of constructing same wherein the membrane fold area is densified by fusing the membrane backing to the membrane and to the reinforcing material thus leaving all of the membrane surface exposed thereby eliminating the problem of membrane "dead areas" associated with prior reinforcing techniques.

Other objects of the invention will be made clear or become apparent from the following description and claims. In the accompanying drawings which form a part of the specification and are to be read in conjunction therewith and in which like reference numerals are used to indicate like parts in the various views:

FIG. 1 is a fragmentary exploded perspective view of an ultrafiltration sheet to which a reinforcing material is to be applied;

FIG. 2 is another perspective view showing a leaf packet prepared according to the present invention;

FIG. 3 is a fragmentary perspective view of a permeate tube around which a plurality of leaf packets and feed channel spacers are positioned;

FIG. 4 is a perspective view similar to FIG. 3 showing further details of construction of the individual leaf members which make up the ultrafiltration module;

FIG. 5 is a fragmentary perspective view of a completed module;

FIG. 6 is an exploded fragmentary perspective of a membrane leaf sandwiched between two feed channel spacers; and

FIG. 7 is a perspective view of an alternative form of the invention.

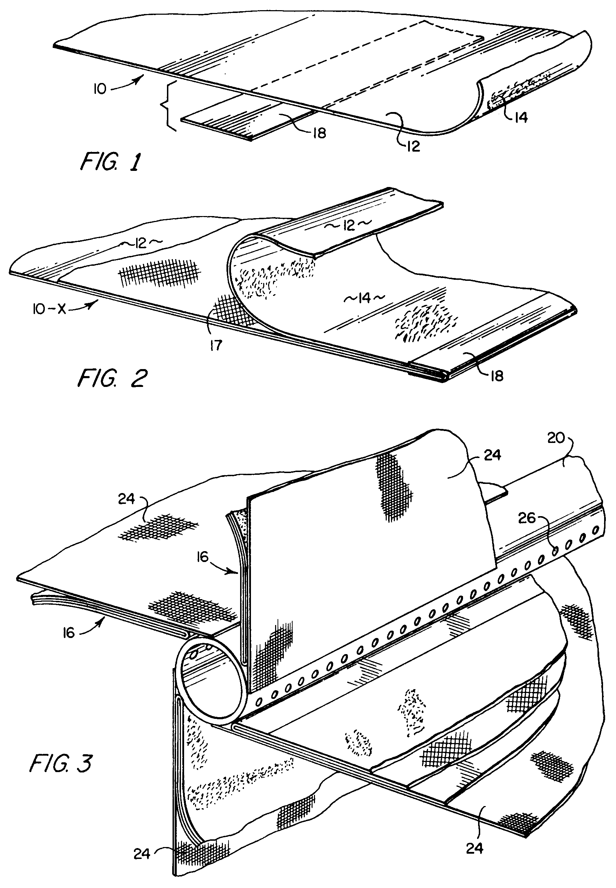

Referring initially to FIG. 1, an ultrafiltration membrane sheet is designated generally by the numeral 10 and comprises an ultrafiltration membrane 12 and a backing material 14. The membrane and the backing are integrally joined by techniques well known in the art to form the membrane sheet. Acceptable membrane materials include a wide range of thermoplastic resins which can be fabricated into a sheet having a pore structure and filtration capability. Known thermoplastic membrane materials include polysulfone, polyvinylidene fluoride, polyethersulfone, polyarylsulfone, polyvinylchloride, polyamides, cellulose acetate, polycarbonates, polytetrafluoroethylene, polyphenylene sulfide, polyethylene, polyethyleneterephthalate, polyamide-imide and polypropylene. Natural membrane materials such as cellulose may also be employed. A preferred material is polyethersulfone.

Acceptable backing materials are woven or nonwoven synthetic materials having the strength necessary to reinforce the membrane and the ability to be integrally bound to the membrane while not interfering with the passage of permeate through the membrane. Suitable backing materials include polyester, polypropylene, polyethylene, and the family of polyamide polymers generally referred to as "nylon".

Following accepted practice for constructing spiral wound ultrafiltration modules, a membrane leaf packet designated generally by the numeral 16 (FIG. 2) is prepared in the following manner. Membrane sheet 10 is divided to present first and second sheet sections 10-X and 10-Y. This may be accomplished be cutting across membrane sheet 10 or by folding across the sheet width as indicated in the drawings. The two sheet sections are then positioned with their ends in planar alignment with backing 14 to the outside and the two membrane surfaces 12 facing each other. A relatively large mesh screen material presents a channel feed spacer 17 which is inserted between sheet sections 10-X and 10-Y. In most instances, the feed spacer will be utilized but it is possible to construct a module without this component.

Prior to folding the membrane sheet 10 to form the leaf packet 16, aforedescribed, the sheet is densified in the fold area which is also the area of the aligned ends so as to provide increased strength and durability. Densification is preferably carried out by utilizing a thermoplastic or thermoset reinforcing material such as strip 18 that is compatible with and will fuse to membrane sheet 10, preferably to backing 14. Suitable reinforcing materials include polypropylene, polyethylene, and polyvinylbutyral and ionomer resins. A preferred material is an ionomer resin sold under the trademark Surlyn by E.I. DuPont de Nemours and Company of Wilmington, Delaware, U.S.A. The reinforcing strip 18 is placed on backing material 14 and then is fused to the sheet 10 by the application of heat and pressure. It may be desirable to wash or apply other surface treatment to the backing prior to fusing. Surface treatments may include solvents, surfactants or other chemicals alone or in combination. For most of the known membrane polymers and backing materials previously noted, a temperature of between 250° and 500° F. applied for one to three minutes along with a pressure of from 70 to 200 pounds per square inch (p.s.i.) will achieve an integral fusing of the reinforcing strip and the membrane sheet. For the preferred material (Surlyn) noted above, a temperature of approximately 440° F. applied for about 45 seconds along with a pressure of 85 p.s.i., followed by gradual cooling under the same pressure for approximately 45 additional seconds presents a product meeting the objectives of the invention. It is desirable to keep the temperature below the melting point of the membrane backing while approaching the glass transition temperature. A thermal impulse sealer utilizing a nichrome wire shielded inside of a Teflon (Reg. TM) covered flat bar and operated by a skilled technician is an acceptable and efficient means for accomplishing the fusing.

The term "fusing" is meant to encompass the joining of separate, independent materials by the application of heat or pressure or both to approach or exceed the glass transition temperature of the materials such that the final composite cannot easily be separated into the original materials. It is, of course, to be understood that the "fusing" may be accomplished (by way of example only) utilizing heat only, pressure only, ultrasonic welding, radiation, and other known techniques or a combination of the foregoing which will bring about the physical change mentioned above.

Returning now to the drawings, reinforcing strip 18 as it appears after sheet 10 is folded to present packet 16 is shown in FIG. 2. It is to be understood that the thickness of strip 18 and the demarcation between it and backing 14 have been exaggerated in FIG. 2 for purposes of illustration while in actual practice the fusing of the strip 18 to the sheet will result in the membrane, membrane backing and reinforcing strip all being substantially integrally fused together with virtually no increase in total thickness of the sheet 10 over its original thickness.

Turning now to FIG. 3, a permeate tube 20 is shown with four leaf packets 16 circumferentially spaced around it. Permeate carrier sheets 24 are placed between each two leaf packets 16 to direct permeate to the interior Of tube 20 through openings 26.

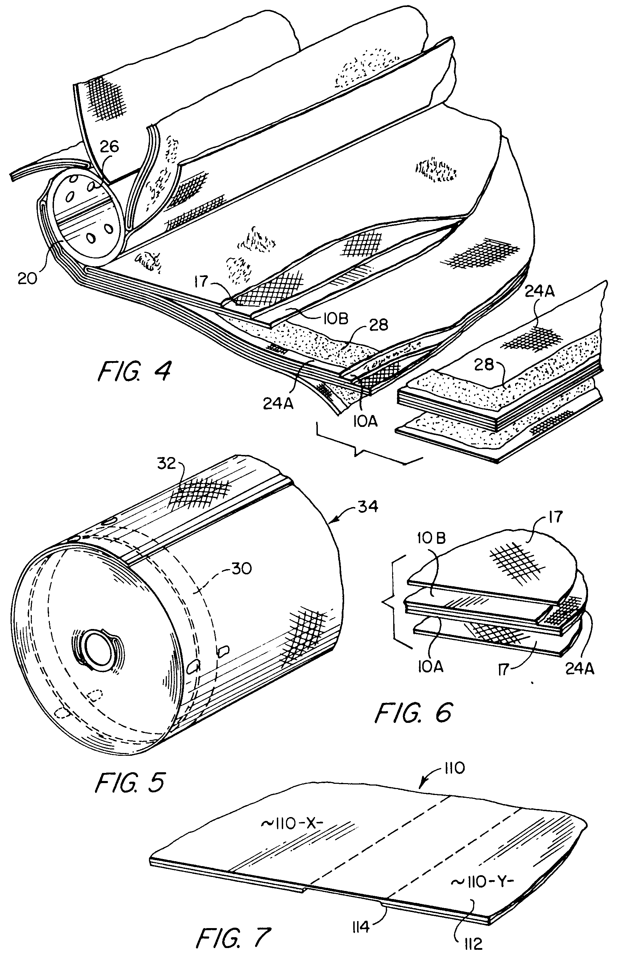

Referring to FIG. 4, once leaf packet 16 and permeate carrier sheet 24 are in place on tube 20, the membrane leaves of the completed spiral module are formed in the following manner. A membrane sheet 10A from one leaf packet is laid on a flat supporting surface and is then overlaid with a permeate carrier sheet 24A. A quantity of adhesive 28 is applied along the edges and across the width of carrier sheet 24A in the manner illustrated in FIG. 4. A membrane sheet 10B from the next adjacent leaf packet 16 is then brought into contact with adhesive 28 so as to form a completed membrane leaf comprised of the two membrane sheets 10A and 10B separated by permeate carrier sheet 24A. Each membrane leaf is separated from an adjacent leaf by a feed channel spacer 17 from the previously assembled leaf packet. This construction is most clearly shown in the exploded view of FIG. 6. The final spiral wound assembly utilizes restraining bands 30 (FIG. 5) to hold the membrane leaves in place and an outerwrap 32 may be used to complete the module; the completed module being designated by the number 34.

In the alternative embodiment of the invention shown in FIG. 7, membrane sheet 110 comprising membrane 112 and backing 114 has been treated to fuse the area between the two broken lines (the fold area and the area of planar alignment of the ends of the two sheet sections 110-X and 110-Y) by the application of heat and pressure to backing 114. While not accomplishing the same degree of densification as in the embodiment previously described, for some applications sheet 110 will prove to be adequate. A leaf packet is prepared from sheet 110 in the same manner as described previously for packet 16. Likewise, formation of the completed module utilizing sheet 110 to form the membrane leaves will be identical to the procedure described for the embodiment of FIGS. 1-6.

The invention thus encompasses a method of preparing a leaf packet useful in forming a spiral filtration module which comprises providing two membrane sheet sections that have their ends in planar alignment (such as by folding a large sheet along the width to present two equal size sheet sections), fusing the membrane sheet in the area of said aligned ends to increase the density of the sheet in this area, providing a feed channel spacer (if desired) and locating it between the two sheet sections followed by joining the sheet sections (such as by stapling the sections together) to present the leaf packet. The densification treatment may include the application of heat or pressure or both to fuse the fold area and may also include fusing a reinforcing material to the backing of the membrane. It is desirable to carry out the densification to such an extent that the membrane 12, backing 14, and the reinforcing material (if utilized) are "fused" as that term is defined herein. A visual indication of fusing is when the fused section becomes translucent. This technique eliminates any possibility of a membrane "dead area" as previously discussed and which sometimes results from using prior art techniques.

From the foregoing, it will be seen that this invention is one well adapted to attain all the ends and objects hereinabove set forth together with other advantages which are obvious and which are inherent to the structure.

It will be understood that certain features and subcombinations are of utility and may be employed without reference to other features and subcombinations. This is contemplated by and is within the scope of the claims.

Since many possible embodiments may be made of the invention without department from the scope thereof, it is to be understood that all matter herein set forth or shown in the accompanying drawings is to be interpreted as illustrative and not in a limiting sense.

## Claims

1. A leaf packet (16) useful in forming a spiral filtration module (34) and comprising: a membrane sheet (10) presenting first and second sheet sections (10-X, 10Y) each having at least one end in planar alignment with an end of the other section, said sheet sections (10-X, 10-Y) having been fused in the area of said aligned ends to increase the density of the sheet (10) in said area.

**2.** The invention of claim 1, wherein said sheet (10) has been fused by the application of heat.

**3.** The invention of claim 1, wherein said sheet (10) has been fused by the application of pressure.

**4.** The invention of claim 1, wherein said sheet (10) has been fused by the application of heat and pressure.

**5.** The invention of claim 1, wherein said sheet (10) comprises an ultrafiltration membrane (12) and a membrane backing (14).

**6.** The invention of claim 5, wherein is included a reinforcing material (18) fused to said sheet (10) in the area of said aligned ends.

**7.** The invention of claim 6, wherein said reinforcing material (18) is fused to said membrane backing (14).

**8.** The invention of claim 1, wherein is included a feed channel spacer (17) sandwiched between said first and second sheet sections (10-X, 10-Y).

**9.** A spiral filtration module (34) for separating a fluid into a filtrate portion and a permeate portion, said module (34) comprising: a permeate carrier tube (20) having a plurality of openings (26) in the tube wall for receiving said permeate portion; at least one leaf packet (16) spirally wound around said tube (20), said packet (16) comprising a membrane sheet (10) presenting first and second sheet sections (10-X, 10-Y) each having at least one end in planar alignment with an end of the other section, said sheet sections (10-X, 10-Y) having been fused in the area of said aligned ends to increase the density of the sheet (10) in said area; and permeate carrier means (24) spirally wound around said tube (20) between each of said leaf packets (16) and joined to each adjacent ultrafiltration sheet (10) along the sides and across the width of the carrier means (24).

**10.** The invention of claim 9, wherein said sheet (10) has been fused by the application of heat to at least partially collapse the pore structure of said membrane sheet (10).

**11.** The invention of claim 9, wherein said sheet (10) has been fused by the application of pressure.

**12.** The invention of claim 9, wherein said sheet (10) has been fused by the application of heat and pressure.

**13.** The invention of claim 9, wherein said sheet (10) comprises an ultrafiltration membrane (12) and a membrane backing (14).

**14.** The invention of claim 13, wherein said reinforcing material (18) is fused to said membrane backing (14).

**15.** The invention of claim 9, wherein is included a reinforcing material (18) fused to said sheet (10) in said area.

**16.** A method of preparing a leaf packet (16) useful in forming a spiral filtration module (34), said method comprising: providing a membrane sheet (10) presenting first and second sections (10-X, 10-Y) each having at least one end in planar alignment with an end of the other section; fusing said sheet (10) in said area to increase the density of the sheet (10) in said area; and joining said sections (10-X, 10-Y) together to present said leaf packet (16).

**17.** A method as set forth in claim 16, wherein said fusing comprises the application of heat.

**18.** A method as set forth in claim 16, wherein said fusing comprises the application of pressure.

**19.** A method as set forth in claim 16, wherein said fusing comprises the application of heat and pressure.

**20.** A method as set forth in claim 16, wherein said sheet (10) comprises an ultrafiltration membrane (12) and a membrane backing (14) and said fusing step comprises applying heat and pressure to said sheet (10).

**21.** A method as set forth in claim 16, wherein said fusing step comprises fusing a reinforcing material (18) to said sheet (10).

**22.** A method as set forth in claim 21, wherein said material (18) is fused to said membrane backing (14).

FIG. 1

FIG. 2

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 842 736 (D.T. BRAY) * Abstract; figures 1-7,9-12; claims 1-5,9-13; column 2, lines 4-31; column 3, line 37 - column 6, line 9; column 6, lines 24-65 * --- | 1-22 | B 01 D 63/10 B 01 D 65/00 |
| X | EP-A-0 253 945 (VOGELBUSCH GmbH) * Whole document * ----- | 1-22 | |

TECHNICAL FIELDS SEARCHED (Int. Cl.5)

B 01 D
A 61 M

The present search report has been drawn up for all claims

| Place of search | Date of completion of the search | Examiner |
|---|---|---|
| THE HAGUE | 06-06-1991 | HOORNAERT P.G.R.J. |